# FASCICULE DE BREVET EUROPEEN

(11) **EP 3 325 803 B1**
(45) Date de publication et mention de la délivrance du brevet: **03.04.2019**
(21) Numéro de dépôt: 16750964.5
(22) Date de dépôt: 15.07.2016
(51) Int. Cl.: F03G 7/04, F03G 7/08

(54) **DISPOSITIF AUTONOME DE STOCKAGE ET DE LIBÉRATION D'ÉNERGIE POUR L'ALIMENTATION D'UN ÉQUIPEMENT ÉLECTRIQUE**
AUTONOME VORRICHTUNG ZUR SPEICHERUNG UND ABGABE VON ENERGIE ZUM BETREIBEN EINES TEILS EINER ELEKTRISCHEN AUSRÜSTUNG
AUTONOMOUS DEVICE FOR STORING AND RELEASING ENERGY IN ORDER TO POWER A PIECE OF ELECTRICAL EQUIPMENT

(30) Priorité: 23.07.2015 FR 1557006
(43) Date de publication de la demande: 30.05.2018
(73) Titulaire: Safran Aircraft Engines, 75015 Paris (FR)
(72) Inventeur: PROST, François, 77550 MOISSY-CRAMAYEL Cedex (FR); BENSE, William, 77550 MOISSY-CRAMAYEL Cedex (FR)
(74) Mandataire: Gevers & Orès
(86) Numéro de dépôt international: PCT/FR2016/051826
(87) Numéro de publication internationale: WO 2017/013342

(56) Documents cités:
- WO-A1-2011/158127
- US-A- 795 761
- US-A- 1 939 776
- US-A- 3 352 108
- US-A1- 2012 313 575

## Description

L'invention concerne un dispositif autonome de stockage et de libération d'énergie pour l'alimentation d'un équipement électrique.

L'invention concerne plus particulièrement un dispositif autonome de stockage et de libération d'énergie pour l'alimentation d'un équipement électrique, notamment un équipement électrique d'un aéronef tel qu'un capteur embarqué.

L'alimentation des capteurs embarqués d'un aéronef est une réelle problématique. Les aéronefs étant de plus en plus surveillés, cela nécessite la présence de capteurs en différents points de leurs fuselages, ou de leurs moteurs, tels que par exemple des capteurs de pression, des capteurs de température, des capteurs de vibration ou encore des jauges de contrainte. Conventionnellement, ces capteurs sont connectés à une ou plusieurs unités de contrôle qui sont généralement agencées à distance desdits capteurs, ce qui implique un cheminement de câbles éventuellement dédiés à la transmission des informations, ou pour le moins dédiés à l'alimentation électrique de ces capteurs à travers des zones du fuselage, ou à travers des zones des moteurs desdits aéronefs qui ne sont pas nécessairement prévues pour le passage de tels câbles. Le passage des câbles à travers ces zones, ou la conception de ces zones afin de faciliter le passage de ces câbles peut s'avérer délicate. Selon les zones traversées, le passage des câbles à travers les cloisons peut également dégrader les performances globales des aéronefs, tant du fait des contraintes d'étanchéité au passage des cloisons que de celles de maintien de l'intégrité desdits câbles.

Par ailleurs, l'installation de tels câbles dans un aéronef est synonyme d'augmentation de la masse globale dudit aéronef, ce qui est particulièrement pénalisant en termes de consommation de carburant.

### ETAT DE LA TECHNIQUE ANTERIEURE

Pour remédier à ces inconvénients, une solution consiste à faire appel à une technologie de récupération d'énergie par le capteur lui-même, technologie aussi connue sous l'acronyme anglo-saxon "energy harvesting". Cette technologie permet à certains capteurs de récupérer de l'énergie en fonction des différentes phases de vol de l'aéronef en la transformant instantanément en énergie électrique, afin de pourvoir à leur alimentation, et d'être ainsi autonomes en énergie.

Il est ainsi actuellement connu d'effectuer la récupération d'énergie électrique à partir d'énergie vibratoire ou d'énergie thermique. Les documents US-3.352.108-A, US-1.939.776-A, et US-795.761-A1 décrivent des dispositifs permettant la récupération d'énergie mécanique à partir d'un différentiel de température. Dans un même esprit, le document US-2012/313575-A1 enseigne la récupération d'énergie à partir des oscillations d'une suspension de véhicule automobile.

Une telle récupération trouve notamment son application dans des capteurs disposés sur ou dans un moteur de l'aéronef. Toutefois, ces énergies sont contraignantes. Ainsi, par exemple, l'énergie vibratoire, qui est conventionnellement récupérée par des dispositifs piézoélectriques, permet de récupérer de l'énergie autour d'une certaine fréquence mais, dès lors que les vibrations s'écartent de cette fréquence, cette technologie ne permet pratiquement plus de récupérer d'énergie. De la même manière, la récupération d'énergie thermique implique l'existence d'un différentiel de température constant, qui n'est pas nécessairement présent durant toutes les phases de vol de l'aéronef.

L'énergie récupérée est généralement utilisée immédiatement, par exemple en étant convertie en énergie électrique, comme l'enseigne le document WO 2011/158.127-A1.

Or, le stockage de l'énergie électrique ainsi récupérée est également une problématique ardue. Les batteries résistent mal aux hautes températures, et aux variations extrêmes de température. De ce fait, elles ne peuvent être embarquées dans toutes les zones de l'aéronef, par exemple à proximité des moteurs, car elles ne sont utilisables qu'à de faibles températures. Par ailleurs, leur poids est lui aussi pénalisant en termes de consommation de carburant par l'aéronef.

Il existe donc un réel besoin pour une solution permettant de bénéficier d'une source d'énergie autonome et fiable, et permettant de stocker cette énergie également de manière fiable et avec un poids embarqué réduit.

### EXPOSÉ DE L'INVENTION

L'invention remédie aux inconvénients précités en proposant un dispositif autonome de stockage et de libération d'énergie pour l'alimentation d'un équipement électrique du type décrit précédemment comportant des moyens de récupération de l'énergie produite par les variations de pression auxquelles est soumis l'aéronef, et de stockage mécanique de cette énergie.

Dans ce but, l'invention propose un dispositif autonome de stockage et de libération d'énergie pour l'alimentation d'un équipement électrique, notamment un équipement électrique du type susmentionné pour un aéronef, caractérisé en ce qu'il comporte :
- un premier moyen, configuré pour transformer une variation de la pression environnante à laquelle est soumis le dispositif, en énergie mécanique,
- au moins un deuxième moyen, configuré pour stocker mécaniquement ladite énergie mécanique en la transformant sous forme d'énergie mécanique potentielle,
- un troisième moyen, configuré pour déclencher la libération de l'énergie mécanique potentielle contenue dans ledit au moins un deuxième moyen en la transformant à nouveau sous forme d'énergie mécanique,
- un quatrième moyen, configuré pour transformer l'énergie mécanique restituée en énergie électrique apte à alimenter ledit équipement électrique.

Selon d'autres caractéristiques de l'invention :
- le premier moyen comporte au moins une membrane mobile, qui est rappelée élastiquement, qui comporte au moins une face qui est soumise à une pression déterminée et une face opposée qui est soumise à ladite pression environnante, ladite membrane étant susceptible de se déplacer en réponse à une variation de ladite pression environnante pour produire par son déplacement ladite énergie mécanique, ledit premier moyen étant par exemple une capsule anéroïde,
- le au moins un deuxième moyen comporte au moins un élément élastique, apte à convertir l'énergie mécanique en énergie potentielle stockée dans ledit élément élastique, et à convertir l'énergie potentielle stockée en énergie mécanique restituée, et un élément d'immobilisation qui est configuré pour immobiliser ledit élément élastique dans une configuration dans laquelle il conserve ladite énergie potentielle,
- le troisième moyen est configuré pour libérer ledit élément d'immobilisation de manière à relâcher ledit élément élastique, en réponse à un franchissement par la pression de l'environnement du dispositif d'un seuil de pression déterminé,
- le quatrième moyen comporte une dynamo,
- l'élément d'immobilisation comporte un dispositif à cliquet comportant au moins un secteur denté, notamment une crémaillère ou une roue à rochet, solidaire en mouvement de l'élément élastique, et un cliquet configuré pour coopérer avec ledit secteur denté en s'opposant à tout mouvement dudit secteur denté et de l'élément élastique correspondant à une libération de l'énergie potentielle stockée dans ledit élément élastique,
- le troisième moyen est configuré pour relever le cliquet du secteur denté en réponse à un franchissement par la pression de l'environnement du dispositif d'un seuil de pression déterminé.
- le troisième moyen comporte au moins un élément mobile configuré pour relever le cliquet hors du secteur denté, et une membrane mobile, solidaire dudit élément de levage, qui est rappelée élastiquement, qui comporte une face soumise à une pression déterminée et une face opposée soumise à la pression environnante, et qui est apte à se déplacer, dès lors que la pression de l'environnement du dispositif franchit un seuil de pression déterminé, pour actionner ledit élément de levage.

L'invention concerne aussi un procédé d'alimentation d'un équipement électrique en fonction de la pression environnante à laquelle est soumis ledit équipement, ledit équipement comportant un dispositif autonome de stockage et de libération d'énergie du type décrit précédemment, caractérisé en ce qu'il comporte :
- une première étape, au cours de laquelle une variation de la pression environnante à laquelle est soumise le dispositif est transformée en une énergie mécanique qui est simultanément stockée sous forme d'énergie potentielle dans l'au moins un élément élastique du deuxième moyen,
- une deuxième étape, succédant à la première étape, au cours de laquelle l'énergie potentielle est conservée dans l'au moins un élément élastique du deuxième moyen tant que la pression environnante ne franchit pas un seuil de pression déterminé,
- une troisième étape, au cours de laquelle, dès lors que la pression environnante franchit ledit seuil de pression déterminé, le troisième moyen libère le deuxième moyen de manière à ce qu'il libère l'énergie potentielle qui est simultanément convertie en énergie mécanique restituée puis en énergie électrique par le quatrième moyen, et au cours de laquelle on alimente l'équipement électrique à l'aide de l'énergie électrique.

L'invention concerne enfin un équipement électrique autonome configuré pour être alimenté en fonction de l'altitude dudit aéronef, caractérisé en ce qu'il comporte au moins un dispositif du type décrit précédemment, ledit dispositif étant soumis à la pression environnant l'aéronef.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue schématique illustrant les interactions entre les différents éléments d'un dispositif selon l'invention ;
- la figure 2 est une vue schématique du dispositif selon l'invention ;
- les figures 3A et 3B sont des vues de détail du deuxième moyen du dispositif selon l'invention dans deux positions de fonctionnement ;
- les figures 4A et 4B sont des vues de détail des deuxième et troisième moyens du dispositif selon l'invention dans deux positions de fonctionnement ;
- la figure 5 est une vue schématique de détail du quatrième moyen du dispositif selon l'invention ;
- la figure 6 est un schéma représentant une première chronologie des étapes d'un procédé d'alimentation d'un équipement électrique à l'aide d'un dispositif selon l'invention, intervenant pendant un vol complet;
- la figure 7 est un schéma représentant une deuxième chronologie en variante des étapes d'un procédé d'alimentation d'un équipement électrique à l'aide d'un dispositif selon l'invention, intervenant entre deux vols successifs.

Dans la description qui va suivre, des chiffres de référence identiques désignent des pièces identiques ou ayant des fonctions similaires.

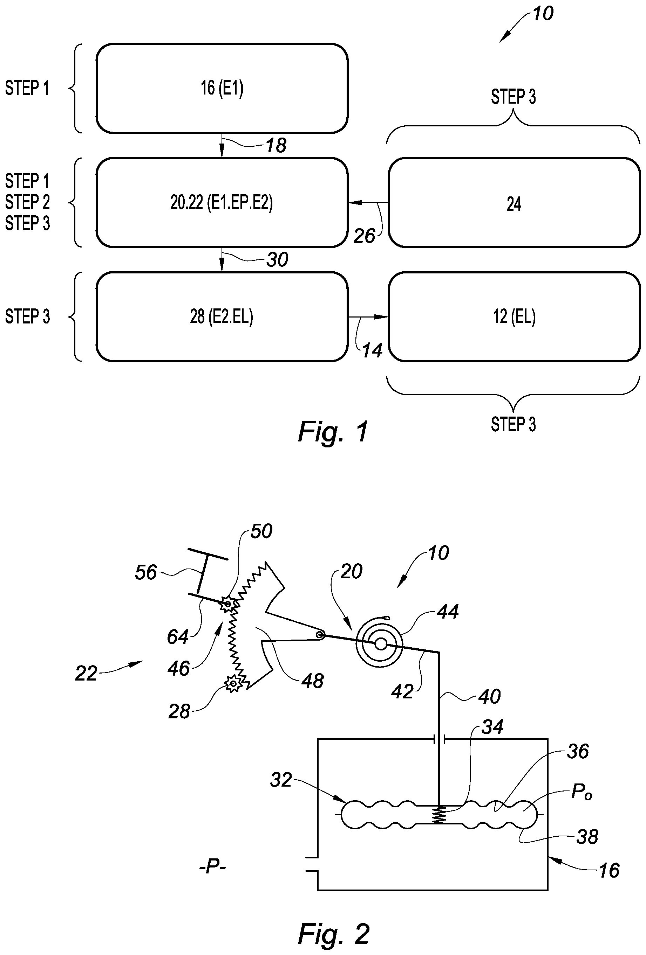

On a représenté sur la figure 1 les éléments d'un dispositif 10 de stockage et de libération d'énergie pour l'alimentation d'un équipement électrique, notamment un équipement électrique 12 d'un aéronef, réalisé conformément à l'invention, et les interactions fonctionnelles entre lesdits éléments.

L'équipement électrique 12 peut notamment comprendre un capteur embarqué tel qu'un capteur de pression, de température, une jauge de contrainte ou tout autre capteur nécessitant une alimentation électrique pour son fonctionnement. Sans limitation de l'invention, l'équipement électrique pourrait être d'une autre nature et consister en un dispositif de signalisation ou tout autre appareil électrique.

Conformément à l'invention, le dispositif 10 est autonome et il permet l'alimentation électrique de l'équipement 12 par l'intermédiaire d'une liaison électrique 14, connue en soi, qui est de préférence aussi courte que possible, le dispositif 10 étant par ailleurs localisé dans un endroit où l'on peut disposer d'un gradient de pression suffisant pour actionner le dispositif 10.

A cet effet, le dispositif 10 comporte un premier moyen 16 qui est configuré pour transformer une variation de la pression environnante à laquelle est soumis le dispositif 10, en une énergie mécanique E1. Ce premier moyen 16 est lié par une liaison mécanique 18 à au moins un deuxième moyen 20, 22, qui est configuré pour stocker mécaniquement ladite énergie mécanique E1 en la transformant sous forme d'énergie mécanique potentielle EP. Plus particulièrement, le dispositif comporte un deuxième moyen 20 qui est configuré pour stocker mécaniquement ladite énergie mécanique E1 en la transformant sous forme d'énergie mécanique potentielle EP. Le dispositif comporte en outre un deuxième moyen 22 qui est configuré pour maintenir cette énergie mécanique potentielle EP stockée.

Le dispositif 10 comporte également un troisième moyen 24, qui est configuré pour commander la libération de l'énergie mécanique potentielle EP précitée afin qu'elle soit restituée sous forme d'une énergie mécanique E2. Le troisième moyen est configuré pour agir mécaniquement sur le deuxième moyen 20, 22, par exemple par l'intermédiaire d'une liaison mécanique 26.

Le dispositif 10 comporte par ailleurs un quatrième moyen 28, qui est configuré pour transformer l'énergie mécanique restituée E2, en une énergie électrique EL apte à alimenter ledit équipement électrique 12. Le quatrième moyen 28 est relié au deuxième moyen 20, 22 par une liaison mécanique 30 et à l'équipement électrique 12 par l'intermédiaire de la liaison électrique 14.

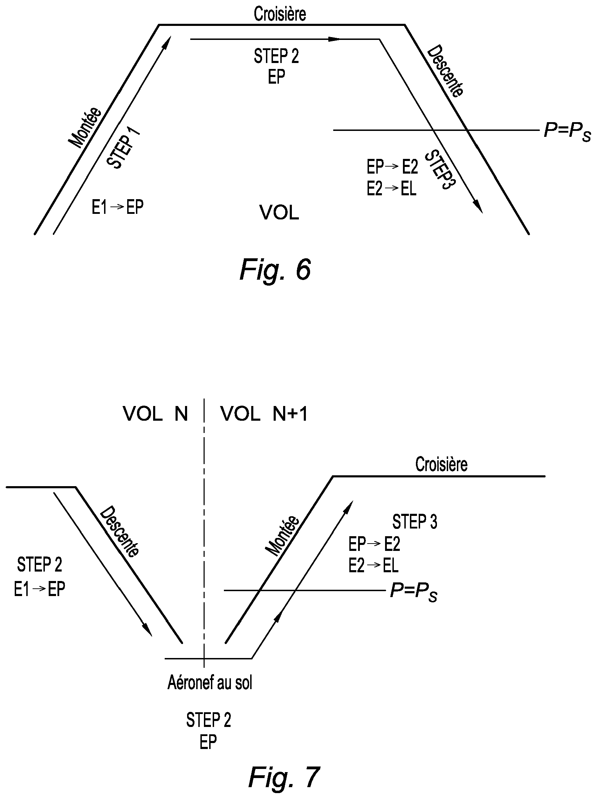

Les différents moyens du dispositif 10 sont destinés à être mis en oeuvre successivement au cours d'une séquence de vol de l'aéronef comportant ce dispositif 10.Ladite séquence est représentée par exemple sur les figures 6 et 7 qui illustrent chacune une variante de l'invention. Néanmoins, dans chacune de ces variantes, les différents moyens du dispositif 10 fonctionnent toujours selon un même type de procédé. Ledit procédé comporte :
- une première étape STEP1 au cours de laquelle l'énergie mécanique E1 est produite et stockée sous forme d'énergie potentielle EP ;
- une deuxième étape STEP2 au cours de laquelle l'énergie potentielle EP est conservée et à l'issue de laquelle elle est libérée ;
- une troisième étape STEP3 au cours de laquelle ladite énergie potentielle EP est transformée en énergie mécanique E2 et au cours de laquelle l'énergie mécanique E2 est simultanément transformée en énergie électrique EL.

La figure 1 illustre également les implications respectives des différents moyens du dispositif 10 dans ces étapes.

Le premier moyen 16 et les deuxièmes moyens 20, 22 sont mis en oeuvre simultanément dans l'étape STEP1 pour produire l'énergie mécanique E1 et la stocker sous forme d'énergie potentielle EP.

Les deuxièmes moyens 20, 22 sont également mis en oeuvre dans la deuxième étape STEP2 au cours de laquelle l'énergie potentielle EP est conservée. Le troisième moyen 24 est mis en oeuvre pour libérer les deuxièmes moyens 20, 22. Le troisième moyen 24 est également mis en oeuvre pour déclencher la troisième étape STEP 3 au cours de laquelle sont respectivement mis à nouveau en oeuvre :
- les deuxièmes moyens 20, 22 qui transforment en sens inverse l'énergie potentielle EP en énergie mécanique E2 ;
- le quatrième moyen 28 qui transforme simultanément l'énergie mécanique E2 en énergie électrique EL ;
- et l'équipement électrique 12 qui est alimenté par le quatrième moyen 28.

Les différentes étapes STEP1, STEP2, STEP3 sont décrites plus en détail dans la suite de la présente description.

On décrit à présent les différents moyens 16, 20, 22, 24, 28 du dispositif 10.

Dans le mode de réalisation préféré de l'invention, comme l'illustre la figure 2, le premier moyen 16 comporte au moins une membrane mobile 32, qui est rappelée élastiquement par un moyen élastique 34, qui comporte au moins une face 36 soumise à une pression déterminée P₀, et une face opposée 38 qui est soumise à la pression environnante P à laquelle est soumise le dispositif 10. Cette membrane mobile 32 est susceptible de se déplacer en réponse à une variation de ladite pression P environnante pour produire par son déplacement l'énergie mécanique E1.

De manière non limitative de l'invention, le premier moyen 16 est par exemple une capsule anéroïde 16 comportant deux parois ou membranes 32 en vis-à-vis emprisonnant un ressort 34 et délimitant une enceinte étanche soumise à la pression P₀. Les deux parois 32 sont mobiles sous l'effet de la variation de la pression P et elles sont susceptibles d'actionner une tige 40 solidaire d'une des parois ou membrane 32, transformant ainsi une variation de la pression P en un mouvement de la tige 40, ce qui permet la production d'une énergie mécanique E1.

Cette énergie mécanique E1 est susceptible d'être convertie en énergie potentielle EP par le deuxième moyen 20, 22. A cet effet, le deuxième moyen 20, 22 comporte au moins un élément élastique 20, apte à convertir l'énergie mécanique E1 en énergie potentielle EP stockée dans ledit élément élastique 20, et à convertir de manière inverse l'énergie potentielle EP stockée pour la restituer sous forme d'énergie mécanique restituée E2. Sur la figure 2, on a représenté de manière non limitative de l'invention un premier levier pivotant 42 qui est accouplé à une extrémité de la tige 40.

Il sera donc compris que la tige 40 et le premier levier 42 forment la liaison mécanique 18 entre le premier moyen 16 et le deuxième moyen 20, 22.

L'élément élastique 20 comporte, dans l'exemple qui a été représenté ici, un ressort spiral 44, qui est relié à la tige 40, et qui permet d'emmagasiner l'énergie sous forme d'énergie potentielle EP et de la restituer sous forme d'énergie mécanique restituée E2. Il sera compris que cette configuration n'est pas limitative de l'invention et que l'élément élastique pourrait comporter un ressort d'un autre type que le ressort spiral 44, par exemple un ressort hélicoïdal, ou encore tout autre moyen élastique, tel qu'un élément pneumatique, ou encore un élément en matériau élastomère, sans changer la nature de l'invention.

Le deuxième moyen 20, 22 comporte par ailleurs un élément d'immobilisation 22 qui est configuré pour immobiliser ledit ressort 44 de l'élément élastique 20 dans une configuration dans laquelle il conserve l'énergie potentielle EP.

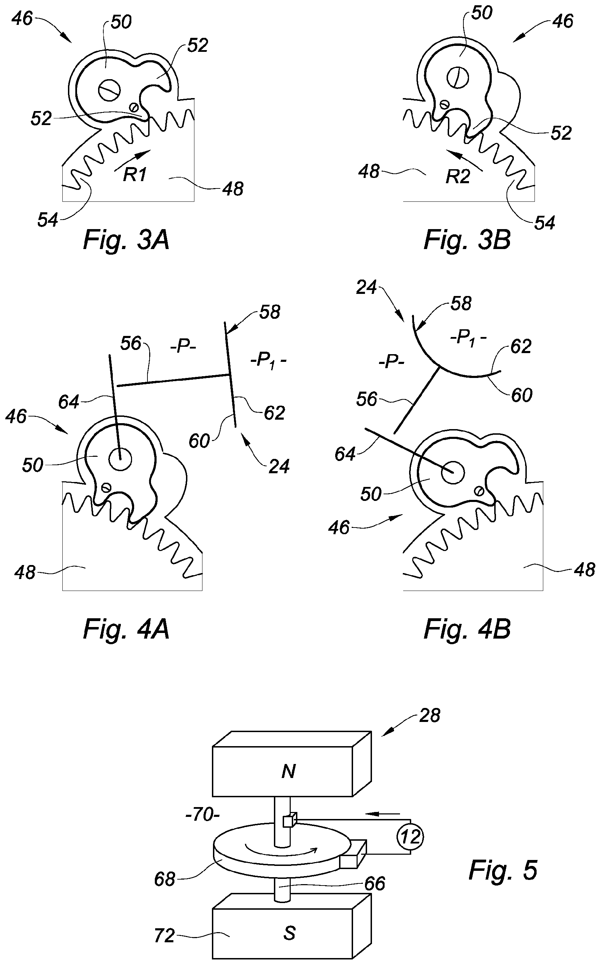

A cet effet, comme l'illustrent les figures 2 à 4B, l'élément d'immobilisation 22 comporte de préférence un dispositif à cliquet 46 comportant au moins un secteur denté 48, notamment une crémaillère ou une roue à rochet, qui est solidaire en mouvement de l'élément élastique 20, et un cliquet 50 qui est configuré pour s'échapper du secteur denté 48 dans un sens de déplacement dudit secteur 48, et à coopérer avec ledit secteur denté 48 pour s'opposer à tout mouvement en sens inverse dudit secteur denté 48, et par conséquent à tout mouvement de relâchement du ressort 44 de l'élément élastique 20. Un tel mouvement correspondrait en effet à une libération de l'énergie potentielle EP stockée dans ledit élément élastique 20 et doit être évité afin de permettre la conservation de l'énergie potentielle EP. La figure 2 illustre par exemple un secteur denté pivotant 48 qui est accouplé à une extrémité du premier levier 42 et qui est susceptible d'être immobilisé par un cliquet 50. Le dispositif à cliquet 46 a été représenté sur les figures 3A et 3B.

Sur la figure 3A, la rotation du secteur denté 48 dans un premier sens R1 permet à deux dents 52 du cliquet 50 de quitter les dents 54 du secteur denté 48, tandis que la rotation du secteur denté 48 dans un deuxième sens R2 opposé au premier sens R1, comme représenté à la figure 3B, permet aux dents 52 du cliquet 50 de se verrouiller dans les dents 54 du secteur denté 48. Il est donc possible d'autoriser la rotation du premier levier 42 précédemment décrit en référence à la figure 2 dans un sens correspondant à la mise sous tension du ressort 44 à l'aide du dispositif à cliquet 46, et d'interdire sa rotation dans le sens opposé au premier sens R1 pour maintenir le ressort 44 sous tension.

Dans le mode de réalisation préféré de l'invention, le troisième moyen 24 est configuré pour libérer l'élément d'immobilisation 22 de manière à relâcher l'élément élastique 20, et par conséquent son ressort 44, en réponse à un franchissement par la pression P qui règne dans l'environnement du dispositif 10 d'un seuil P_{S} de pression déterminé.

Plus particulièrement, le troisième moyen 24 est configuré pour soulever le cliquet 50 du secteur denté 48 dès lors que la pression P environnant le dispositif 10 franchit le seuil de pression P_{S} déterminé. A cet effet, comme l'illustrent les figures 4A et 4B, le troisième moyen 24 comporte au moins un élément de levage 56 qui est configuré pour soulever le cliquet 50 hors du secteur denté 48, et une membrane mobile 58, solidaire dudit élément de levage 56, qui est rappelée élastiquement vers sa position de repos. Une face 60 de la membrane 58 est soumise à une pression déterminée P₁, et une face opposée 62 de la membrane 58, soumise à la pression environnante P, est susceptible de se déplacer à partir du franchissement du seuil de pression P_{S} déterminé pour actionner ledit élément de levage 56. L'élément de levage 56 est par exemple conformé sous la forme d'un deuxième levier 56, solidaire de la membrane 58, qui est apte à coopérer avec un troisième levier 64 solidaire en rotation du cliquet 50, pour provoquer son basculement dès lors que le seuil de pression P_{S} a été dépassé par la pression environnante P, comme représenté à la figure 4B.

Il sera donc compris que le deuxième levier 56 et le troisième levier 64 forment la liaison mécanique 26 entre le troisième moyen 24 et les deuxièmes moyens 20, 22.

Il sera compris que tout autre mode de réalisation du troisième moyen 24 peut évidemment convenir à la bonne mise en oeuvre de l'invention.

La libération du secteur denté 48 permet de provoquer la rotation dudit secteur denté 48, et de transmettre ce mouvement à la tige 42 et par conséquent de transformer à nouveau l'énergie potentielle EP, emmagasinée par le ressort 44, en énergie mécanique E2. Le secteur denté 48 ou la tige 42 peut être accouplé, au besoin par l'intermédiaire d'un dispositif de transmission de mouvement adapté, au quatrième moyen 28 pour transformer l'énergie mécanique E2 ainsi restituée en énergie électrique EL. L'accouplement du secteur denté 48 ou de la tige 42 au quatrième moyen 28 a été représenté de manière schématique sur la figure 2 sous la forme d'une roue dentée.

Le quatrième moyen 28 a été représenté de manière plus détaillée sur la figure 5 sous la forme d'une dynamo comportant un axe 66 solidaire d'une bobine 68 qui est montée tournante dans l'entrefer 70 d'un aimant 72. Il sera compris que le quatrième moyen 28 pourrait être réalisé sous une autre forme, par exemple un dispositif piézoélectrique.

Dans cette configuration, un procédé d'alimentation d'un équipement électrique en fonction de la pression environnante P à laquelle est soumise ledit équipement comporte différentes étapes liées à la croissance ou à la décroissance de la pression environnante P.

D'une manière générale, le procédé comporte ainsi une première étape STEP1, au cours de laquelle une variation de la pression environnante P à laquelle est soumise le dispositif 10, c'est à dire une diminution ou respectivement une augmentation de ladite pression environnante P, est transformée en énergie mécanique E1 et simultanément stockée sous forme d'énergie potentielle EP dans le ressort 44 de l'élément élastique 20 du deuxième moyen 20, 22. Au cours de cette étape STEP1, la variation de la pression P actionne par exemple la capsule anéroïde 16 qui actionne la tige 40, qui actionne le premier levier 42, qui entraîne à son tour le ressort 44.

Puis survient une deuxième étape STEP2, au cours de laquelle, tant que la pression environnante P ne franchit pas un seuil de pression P_{S} déterminé, c'est-à-dire tant qu'elle demeure inférieure (respectivement supérieure) audit seuil de pression P_{S} déterminé, l'énergie potentielle EP est conservée dans le ressort 44 du deuxième moyen 20, 22. Au cours de cette étape, l'élément élastique 20, et en particulier son ressort 44, est maintenu bloqué sous tension par le dispositif à cliquet 46.

Puis survient une troisième étape STEP3, au cours de laquelle, dès lors que la pression environnante P franchit le seuil de pression déterminé P_{S}, le troisième moyen 24 libère le deuxième moyen 20, 22 de manière à ce qu'il libère l'énergie potentielle EP qui est simultanément restituée sous forme d'énergie mécanique E2 puis à nouveau transformée en énergie électrique EL par le quatrième moyen 24. Ainsi, au cours de cette phase, le mouvement de la membrane 58 provoque l'actionnement du deuxième levier 56 et le basculement du cliquet 50, ce qui permet de libérer le secteur denté 48 du dispositif à cliquet 46 et de libérer ainsi le ressort 44.

Au cours de cette troisième étape STEP3, on alimente donc l'équipement électrique 12 à l'aide de l'énergie électrique EL.

Les figures 6 et 7 illustrent deux chronologies différentes des étapes du procédé d'alimentation selon l'invention, intervenant respectivement pendant un vol complet VOL ou pendant deux vols successifs VOL N, VOL N+1.

Sur la figure 6, le procédé comporte en premier lieu une étape STEP1, au cours de laquelle la variation de la pression P permet de produire l'énergie mécanique E1 et de la convertir simultanément en énergie potentielle mécanique EP. Cette étape intervient en phase de montée, la pression P variant par exemple d'une pression de l'ordre de 1013 mbar, à quelques variations près en fonction de l'altitude de l'aéroport d'où l'aéronef décolle et de son climat, jusqu'à une pression d'environ 300 mbar, pour une altitude de croisière de 30 000 pieds.

A cette altitude de croisière de l'aéronef intervient l'étape STEP2, pendant laquelle l'énergie potentielle EP est conservée. Lorsque l'aéronef descend, la pression environnante P augmente jusqu'à franchir un seuil P_{S} qui déclenche au cours de l'étape STEP3 la libération de l'énergie potentielle EP et simultanément sa transformation en énergie mécanique restituée E2 puis en énergie électrique EL. Cette configuration trouve tout particulièrement à s'appliquer pour un capteur qui n'est destiné à être alimenté qu'en descente, par exemple un capteur devant être activé au moment ou préalablement à un atterrissage.

Sur la figure 7, l'étape STEP1 au cours de laquelle la variation de la pression P permet de produire l'énergie mécanique E1 et de la convertir en énergie potentielle mécanique EP, intervient en phase de descente d'un premier vol, la pression environnante croissant par exemple de 300 mbar à 1013 mbar.

Puis intervient l'étape STEP2, pendant une phase au sol de l'aéronef, pendant laquelle l'énergie potentielle EP est conservée. Lorsque l'aéronef s'envole à nouveau, la pression environnante P décroit jusqu'à franchir un seuil P_{S} qui déclenche au cours de l'étape STEP3 la libération de l'énergie potentielle EP et la restitution de l'énergie mécanique E2 et sa transformation en énergie électrique EL.

Cette configuration trouve tout particulièrement à s'appliquer pour un équipement ne devant être alimenté qu'en montée, par exemple pour alimenter un capteur de mesure poussée d'un moteur de l'aéronef.

L'invention trouve donc naturellement à s'appliquer à un aéronef comportant un équipement électrique autonome configuré pour être alimenté en fonction de l'altitude dudit aéronef, et permet ainsi de faciliter et limiter le câblage d'un tel aéronef.

## Revendications

1. Dispositif (10) autonome de stockage et de libération d'énergie pour l'alimentation d'un équipement électrique d'un aéronef (12), le dispositif comportant :
- un premier moyen (16), configuré pour transformer une variation d'une pression environnante (P) à laquelle est soumis le dispositif (10), en énergie mécanique (E1),
- au moins un deuxième moyen (20, 22), configuré pour stocker mécaniquement ladite énergie mécanique (E1) en la transformant sous forme d'énergie mécanique potentielle (EP)
le dispositif (10) étant **caractérisé en ce qu'**il comprend
- un troisième moyen (24), configuré pour déclencher la libération de l'énergie mécanique potentielle (EP) contenue dans ledit au moins un deuxième moyen (20, 22) en la transformant sous forme d'énergie mécanique restituée (E2),
- un quatrième moyen (28), configuré pour transformer l'énergie mécanique restituée (E2) en énergie électrique (EL) apte à alimenter ledit équipement électrique (12).

2. Dispositif (10) selon la revendication précédente, **caractérisé en ce que** le premier moyen (16) comporte au moins une membrane mobile (32), qui est rappelée élastiquement, qui comporte au moins une face (36) qui est soumise à une pression déterminée (P₀) et une face opposée (38) qui est soumise à ladite pression environnante (P), ladite membrane (32) étant susceptible de se déplacer en réponse à une variation de ladite pression (P) environnante pour produire par son déplacement ladite énergie mécanique (E1).

3. Dispositif (10) selon l'une des revendications 1 ou 2, **caractérisé en ce que** le au moins un deuxième moyen (20, 22) comporte au moins un élément élastique (20), apte à convertir l'énergie mécanique (E1) en énergie potentielle (EP) stockée dans ledit élément élastique (20), et à convertir l'énergie potentielle stockée (EP) en énergie mécanique restituée (E2), et un élément d'immobilisation (22) qui est configuré pour immobiliser ledit élément élastique (20) dans une configuration dans laquelle il conserve ladite énergie potentielle (EP).

4. Dispositif (10) selon la revendication 3, **caractérisé en ce que** le troisième moyen (24) est configuré pour libérer ledit élément d'immobilisation (22) de manière à relâcher ledit élément élastique (20), en réponse à un franchissement par la pression (P) de l'environnement du dispositif (10) d'un seuil de pression déterminé (Pₛ).

5. Dispositif (10) selon l'une des revendications précédentes, **caractérisé en ce que** le quatrième moyen (28) comporte une dynamo.

6. Dispositif (10) selon la revendication 5 prise en combinaison avec une des revendications 3 à 4 ou selon l'une des revendications 3 à 4, **caractérisé en ce que** l'élément d'immobilisation (22) comporte un dispositif à cliquet (46) comportant au moins un secteur denté (48), notamment une crémaillère solidaire en mouvement de l'élément élastique (20), et un cliquet (50) configuré pour coopérer avec ledit secteur denté (48) en s'opposant à tout mouvement dudit secteur denté (48) et de l'élément élastique (20) correspondant à une libération de l'énergie potentielle (EP) stockée dans ledit élément élastique (20).

7. Dispositif (10) selon la revendication précédente prise en combinaison avec la revendication 4, **caractérisé en ce que** le troisième moyen (24) est configuré pour relever le cliquet (50) du secteur denté en réponse à un franchissement par la pression (P) de l'environnement du dispositif (10) du seuil de pression (P_{S}) déterminé.

8. Dispositif (10) selon la revendication précédente, **caractérisé en ce que** le troisième moyen comporte au moins un élément mobile (56) configuré pour relever le cliquet (50) hors du secteur denté (48), et une membrane mobile (58), solidaire dudit élément de levage (56), qui est rappelée élastiquement, qui comporte une face (60) soumise à une pression déterminée (P₁) et une face opposée (62) soumise à la pression environnante (P), et qui est apte à se déplacer, dès lors que la pression de l'environnement (P) du dispositif (10) franchit un seuil de pression (P_{S}) déterminé, pour actionner ledit élément de levage (56).

9. Procédé d'alimentation d'un équipement électrique d'un aéronef (12) en fonction de la pression environnante (P) à laquelle est soumis ledit équipement (12), ledit équipement (12) comportant un dispositif (10) autonome de stockage et de libération d'énergie selon l'une des revendications 1 à 8, le procédé comportant:
- une première étape (STEP1), au cours de laquelle une variation de la pression environnante (P) à laquelle est soumise le dispositif (10) est transformée en une énergie mécanique (E1) qui est simultanément stockée sous forme d'énergie potentielle (EP) dans l'au moins un élément élastique (20) du deuxième moyen (20, 22),
- une deuxième étape (STEP2), succédant à la première étape (STEP 1), au cours de laquelle l'énergie potentielle (EP) est conservée dans l'au moins un élément élastique (20) du deuxième moyen (20, 22) tant que la pression environnante (P) ne franchit pas un seuil de pression déterminé (P_{S}),
- une troisième étape (STEP3), au cours de laquelle, dès lors que la pression environnante (P) franchit ledit seuil de pression déterminé (P_{S}), le troisième moyen (24) libère le deuxième moyen (20, 22) de manière à ce qu'il libère l'énergie potentielle (EP) qui est simultanément convertie en énergie mécanique restituée (E2) puis en énergie électrique (EL) par le quatrième moyen (28), et au cours de laquelle on alimente l'équipement électrique (12) à l'aide de l'énergie électrique (EL).

10. Aéronef comportant un équipement électrique autonome (12) configuré pour être alimenté en fonction de l'altitude dudit aéronef, **caractérisé en ce qu'**il comporte au moins un dispositif (10) selon l'une des revendications 1 à 8 d'alimentation de l'équipement électrique, ledit dispositif (10) étant soumis à la pression (P) environnant l'aéronef.

## Patentansprüche

1. Autonome Vorrichtung (10) zur Speicherung und Abgabe von Energie zum Stromversorgung einer elektrischen Ausrüstung (12), eines Luftfahrzeugs, wobei die Vorrichtung Folgendes umfasst:
- ein erstes Mittel (16), das konfiguriert ist, um eine Änderung eines Umgebungsdrucks (P), dem die Vorrichtung (10) ausgesetzt ist, in mechanische Energie (E1) umzuwandeln,
- mindestens ein zweites Mittel (20, 22), das konfiguriert ist, um die mechanische Energie (E1) mechanisch zu speichern, indem es sie in potenzielle mechanische Energie (EP) umwandelt, wobei die Vorrichtung (10) **dadurch gekennzeichnet ist, dass** sie Folgendes umfasst
- ein drittes Mittel (24), das konfiguriert ist, um die Abgabe der in dem mindestens einen zweiten Mittel (20, 22) enthaltenen potenziellen mechanischen Energie (EP) auszulösen, indem es sie in wiederhergestellte mechanische Energie (E2) umwandelt,
- ein viertes Mittel (28), das konfiguriert ist, um die wiederhergestellte mechanische Energie (E2) in elektrische Energie (EL) umzuwandeln, die zum Stromversorgung der elektrischen Ausrüstung (12) geeignet ist.

2. Vorrichtung (10) nach dem vorstehenden Anspruch, **dadurch gekennzeichnet, dass** das erste Mittel (16) mindestens eine bewegliche Membran (32) aufweist, die elastisch vorgespannt ist, die mindestens eine Fläche (36) aufweist, die einem bestimmten Druck (P₀) ausgesetzt ist, und eine gegenüberliegende Fläche (38), die dem Umgebungsdruck (P) ausgesetzt ist, wobei die Membran (32) als Reaktion auf eine Änderung des Umgebungsdrucks (P) bewegbar ist, um die mechanische Energie (E1) durch ihre Bewegung zu erzeugen.

3. Vorrichtung (10) nach einem der Ansprüche 1 oder 2, **dadurch gekennzeichnet, dass** das mindestens eine zweite Mittel (20, 22) mindestens ein elastisches Element (20) aufweist, das geeignet ist, mechanische Energie (E1) in die im elastischen Element (20) gespeicherte potenzielle Energie (EP) umzuwandeln und die gespeicherte potenzielle Energie (EP) in wiederhergestellte mechanische Energie (E2) umzuwandeln, und ein Immobilisierungselement (22), das konfiguriert ist, um das elastische Element (20) in einer Konfiguration zu immobilisieren, in der es die potenzielle Energie (EP) konserviert.

4. Vorrichtung (10) nach Anspruch 3, **dadurch gekennzeichnet, dass** das dritte Mittel (24) konfiguriert ist, um das Immobilisierungselement (22) derart freizugeben, dass das elastische Element (20) gelöst wird, als Reaktion auf ein Überschreiten einer bestimmten Druckschwelle (Pₛ) durch den Umgebungsdruck (P) der Vorrichtung (10).

5. Vorrichtung (10) nach einem der vorstehenden Ansprüche, **dadurch gekennzeichnet, dass** das vierte Mittel (28) einen Dynamo aufweist.

6. Vorrichtung (10) nach Anspruch 5 in Kombination mit einem der Ansprüche 3 bis 4 oder nach einem der Ansprüche 3 bis 4, **dadurch gekennzeichnet, dass** das Immobilisierungselement (22) eine Klinkenvorrichtung (46) aufweist, die mindestens einen Zahnsektor (48) aufweist, insbesondere eine Zahnstange, die in Bewegung mit dem elastischen Element (20) fest verbunden ist, und eine Klinke (50), die konfiguriert ist, um mit dem Zahnsektor (48) zusammenzuwirken, indem sie jeder Bewegung des Zahnsektors (48) und des elastischen Elements (20) entgegenwirkt, die einer Abgabe der in dem elastischen Element (20) gespeicherten potenziellen Energie (EP) entspricht.

7. Vorrichtung (10) nach dem vorstehenden Anspruch in Kombination mit Anspruch 4, **dadurch gekennzeichnet, dass** das dritte Mittel (24) konfiguriert ist, um die Klinke (50) des Zahnsektors als Reaktion auf ein Überschreiten der bestimmten Druckschwelle (Pₛ) durch den Umgebungsdruck (P) der Vorrichtung (10) anzuheben.

8. Vorrichtung (10) nach dem vorstehenden Anspruch, **dadurch gekennzeichnet, dass** das dritte Mittel mindestens ein bewegliches Element (56) aufweist, das konfiguriert ist, um die Klinke (50) außerhalb des Zahnsektors (48) anzuheben, und eine bewegliche Membran (58), die mit dem Hubelement (56) fest verbunden ist, die elastisch vorgespannt ist, die eine Fläche (60) aufweist, die einem bestimmten Druck (P₁) ausgesetzt ist und eine gegenüberliegende Fläche (62) aufweist, die dem Umgebungsdruck (P) ausgesetzt ist, und die geeignet ist, sich zu bewegen, sobald der Umgebungsdruck (P) der Vorrichtung (10) eine bestimmte Druckschwelle (Pₛ) überschreitet, um das Hubelement (56) anzutreiben.

9. Verfahren zum Stromversorgung einer elektrischen Ausrüstung eines Luftfahrzeugs (12) in Abhängigkeit des Umgebungsdrucks (P), dem die Ausrüstung (12) ausgesetzt ist, wobei die Ausrüstung (12) eine autonome Energiespeicher- und -abgabevorrichtung (10) nach einem der Ansprüche 1 bis 8 aufweist, wobei das Verfahren Folgendes aufweist:
- einen ersten Schritt (STEP1), bei dem eine Änderung des Umgebungsdrucks (P), dem die Vorrichtung (10) ausgesetzt ist, in eine mechanische Energie (E1) umgewandelt wird, die gleichzeitig als potenzielle Energie (EP) in dem mindestens einen elastischen Element (20) des zweiten Mittels (20, 22) gespeichert ist,
- einen zweiten Schritt (STEP2), der dem ersten Schritt (STEP 1) folgt, bei dem die potentielle Energie (EP) in dem mindestens einen elastischen Element (20) des zweiten Mittels (20, 22) konserviert wird, solange der Umgebungsdruck (P) eine bestimmte Druckschwelle (Pₛ) nicht überschreitet,
- einen dritten Schritt (STEP3), bei dem, sobald der Umgebungsdruck (P) die bestimmte Druckschwelle (Pₛ) überschreitet, das dritte Mittel (24) das zweite Mittel (20, 22) derart freigibt, dass es die potentielle Energie (EP) abgibt, die gleichzeitig in wiederhergestellte mechanische Energie (E2) und dann in elektrische Energie (EL) durch das vierte Mittel (28) umgewandelt wird und bei dem die elektrische Ausrüstung (12) mittels elektrischer Energie (EL) betrieben wird.

10. Luftfahrzeug, das eine autonome elektrische Ausrüstung (12) aufweist, die konfiguriert ist, um in Abhängigkeit von der Höhe des Luftfahrzeugs angetrieben zu werden, **dadurch gekennzeichnet, dass** es mindestens eine Vorrichtung (10) nach einem der Ansprüche 1 bis 8 zum Stromversorgung der elektrischen Ausrüstung aufweist, wobei die Vorrichtung (10) dem das Luftfahrzeug umgebenden Druck (P) ausgesetzt ist.

## Claims

1. Self-contained device (10) for storing and releasing energy in order to power electrical equipment (12), the device comprising :
- a first means (16) that is designed to transform a variation in ambient pressure (P) applied to the device (10) into mechanical energy (E1),
- at least one second means (20, 22) that is designed to mechanically store said mechanical energy (E1) by transforming it into the form of mechanical potential energy (EP), the device (10) being **characterised in that** it comprises :
- a third means (24) that is designed to trigger the release of the mechanical potential energy (EP) contained in said at least one second means (20, 22) by transforming it into the form of restored mechanical energy (E2),
- a fourth means (28) which is designed to transform the restored mechanical energy (E2) into electrical energy (EL) that is suitable for powering said electrical equipment (12).

2. Device (10) according to the preceding claim, **characterised in that** the first means (16) comprises at least one resiliently returning movable diaphragm (32) that has at least one surface (36) to which a specified pressure (Pₒ) is applied, and an opposing surface (38) to which said ambient pressure (P) is applied, said diaphragm (32) being able to move in response to a variation in said ambient pressure (P) in order to produce said mechanical energy (E1) by means of the movement of said diaphragm.

3. Device (10) according to either claim 1 or claim 2, **characterised in that** the at least one second means (20, 22) comprises at least one resilient element (20) that is capable of converting the mechanical energy (E1) into potential energy (EP) that is stored in said resilient element (20), and of converting the stored potential energy (EP) into restored mechanical energy (E2), and an immobilisation element (22) that is designed to immobilise said resilient element (20) in a configuration in which it conserves said potential energy (EP).

4. Device (10) according to claim 3, **characterised in that** the third means (24) is designed to free said immobilisation element (22) so as to release said resilient element (20) in response to the pressure (P) of the surroundings of the device (10) exceeding a specified pressure threshold (Pₛ).

5. Device (10) according to any of the preceding claims, **characterised in that** the fourth means (28) comprises a dynamo.

6. Device (10) according to claim 5 taken in combination with any of claims 3 to 4 or according to any of claims 3 to 4, **characterised in that** the immobilisation element (22) comprises a pawl device (46) having at least one toothed sector (48), in particular a rack that is fixed to the resilient element (20) for movement therewith, and a pawl (50) that is designed to engage in said toothed sector (48), opposing any movement of said toothed sector (48) and of the resilient element (20) that corresponds to a release of the potential energy (EP) stored in said resilient element (20).

7. Device (10) according to the preceding claim in combination with claim 4, **characterised in that** the third means (24) is designed to lift the pawl (50) from the toothed sector in response to the pressure (P) of the surroundings of the device (10) exceeding a specified pressure threshold (Pₛ).

8. Device (10) according to the preceding claim, **characterised in that** the third means comprises at least one movable element (56) that is designed to lift the pawl (50) out of the toothed sector (48), and a resiliently returning movable diaphragm (58) that is rigidly connected to said lifting element (56), that has one surface (60) to which a specified pressure (Pi) is applied, and an opposing surface (62) to which the ambient pressure (P) is applied, and which is able to move, as soon as the pressure (P) in the surroundings of the device (10) exceeds a specified pressure threshold (Pₛ), in order to actuate said lifting element (56).

9. Method for powering electrical equipment (12) of an aircraft depending on the ambient pressure (P) applied to said equipment (12), said equipment (12) comprising a self-contained device (10) for storing and releasing energy according to any of claims 1 to 8, said method comprising :
- a first step (STEP1) during which a variation in the ambient pressure (P) applied to the device (10) is transformed into mechanical energy (E1) that is simultaneously stored in the form of potential energy (EP) in the at least one resilient element (20) of the second means (20, 22),
- a second step (STEP2) that follows the first step (STEP1) and during which the potential energy (EP) is conserved in the at least one resilient element (20) of the second means (20, 22) as long as the ambient pressure (P) does not exceed a specified pressure threshold (Ps),
- a third step (STEP3) during which, as soon as the ambient pressure (P) exceeds said specified pressure threshold (Pₛ), the third means (24) releases the second means (20, 22) such that said second means releases the potential energy (EP) which is simultaneously converted into restored mechanical energy (E2) and then into electrical energy (EL) by the fourth means (28), and during which step the electrical equipment (12) is powered using the electrical energy (EL).

10. Aircraft comprising self-contained electrical equipment (12) that is designed to be powered depending on the altitude of said aircraft, **characterised in that** it comprises at least one device (10) according to any of claims 1 to 8 for powering the electrical equipment, the ambient pressure (P) of the aircraft being applied to said device (10).
